# EUROPEAN PATENT APPLICATION

(11) **EP 4 656 427 A1**
(43) Date of publication of application: **03.12.2025**
(21) Application number: 24178312.5
(22) Date of filing: 27.05.2024
(51) Int. Cl.: B60K 1/04

(54) **BATTERY PACK SUPPORT SYSTEM**

(71) Applicant: VOLVO TRUCK CORPORATION, 405 08 Göteborg (SE)
(72) Inventor: LANDVIK, Sondre, 417 61 Göteborg (SE)
(74) Representative: Germain Maureau

(57) **Abstract**

A battery pack support system (10) configured for use on a vehicle (100), the battery pack support system including a support panel (20) configured to support one or more battery pack (200) on a vehicle, the support panel extending between a first end (22) and a second end (24), the support panel including an engagement surface (26, 28) extending between the first end and the second end of the support panel, the engagement surface being configured to interface with one or more battery pack to secure the support panel to one or more battery pack, a first coupling member (42) being configured to secure the support panel to one or more battery pack, and a second coupling member (50) being configured to secure the support panel to a frame member (102a, 102b) of a vehicle.

## Description

### TECHNICAL FIELD

The disclosure relates generally to energy storage systems for vehicles. In aspects, the disclosure relates to battery pack support systems configured for use on vehicles. The disclosure may be applied to heavy-duty vehicles, such as trucks, buses, and construction equipment, among other vehicle types. However, although the disclosure may be described with respect to a particular vehicle, the disclosure is not restricted to any particular vehicle.

### BACKGROUND

In the field of heavy-duty vehicles, use of electric battery power, in place of or in combination with an internal combustion engine, is increasing. In such applications, multiple battery packs are typically mounted directly to a load-bearing portion of a corresponding vehicle, such as a chassis of the vehicle.

Due to the long driving ranges required by users of heavy-duty vehicles, it is important to ensure that sufficient electric battery power is mounted to the corresponding vehicle, which may only have a limited amount of space for such usage. However, increasing the amount of electric battery power that is mounted to a vehicle often results in reduced durability, safety, and aftermarket service corresponding to battery packs mounted to the vehicle and/or to the vehicle. Further, increasing the amount of electric battery power that is mounted to a vehicle often results in an increased complexity and costs associated with the battery packs mounted to the vehicle and/or to the vehicle.

Accordingly, it is desirable to provide a battery pack support system configured for use on a vehicle that is capable of allowing for multiple battery packs to be mounted to a vehicle, while improving durability, safety, and aftermarket service of battery packs mounted to a vehicle and reducing complexity and costs associated with mounting battery packs to a vehicle.

### SUMMARY

According to aspects of the disclosure, a battery pack support system configured for use on a vehicle is provided. The battery pack support system includes a support panel configured to support one or more battery pack on a vehicle. The support panel extends between a first end and a second end. The support panel includes an engagement surface extending between the first end and the second end of the support panel. The engagement surface is configured to interface with one or more battery pack to secure the support panel to one or more battery pack. The battery pack support system includes a first coupling member configured to secure the support panel to one or more battery pack and a second coupling member configured to secure the support panel to a frame member of a vehicle. Wherein, the battery pack support system is capable of securing one or more battery pack to a vehicle as a single unit when the support panel is secured to one or more battery pack and the support panel is secured to a frame member of a vehicle.

According to aspects of the disclosure, the support panel may be formed from a composite material.

According to aspects of the disclosure, the support panel may be formed from at least a first material and a second material.

According to aspects of the disclosure, the first material of the support panel may have a first density, the second material of the support panel may have a second density, and the first density of the first material may be greater than the second density of the second material.

According to aspects of the disclosure, the support panel may include a layered arrangement of the first material and the second material.

According to aspects of the disclosure, the support panel may include a first layer formed from the first material, a second layer formed from the first material, and a third layer formed from the second material.

According to aspects of the disclosure, the third layer of the support panel may be sandwiched between the first layer and the second layer of the support panel.

According to aspects of the disclosure, the battery pack support system may include a side panel configured to be joined to the support panel and the side panel may be configured to at least partially enclose one or more battery pack when the side panel is joined to the support panel and the support panel is secured to one or more battery pack.

According to aspects of the disclosure, the side panel may be oriented substantially perpendicular to the support panel when the side panel is joined to the support panel.

According to aspects of the disclosure, the side panel and the support panel may have a substantially similar composition.

According to aspects of the disclosure, the support panel may include a first engagement surface and a second engagement surface, each of the first engagement surface and the second engagement surface may extend between the first end and the second end of the support panel, and each of the first engagement surface and the second engagement surface may be configured to interface with one or more battery pack to secure one or more battery pack to support panel.

According to aspects of the disclosure, the first engagement surface of the support panel may oppose the second engagement surface of the support panel so that one or more battery pack interfacing with the first engagement surface is oriented in a position above one or more battery pack interfacing with the second engagement surface when each of the first engagement surface and the second engagement surface are interfacing with one or more battery pack.

According to aspects of the disclosure, the support panel may be configured to extend across a frame member of a vehicle, at a position above or below a frame member of a vehicle, when the support panel is secured to a frame member of a vehicle.

According to aspects of the disclosure, a method of securing one or more battery pack to a vehicle is provided. The method includes providing a battery pack support system according to aspect disclosed herein, providing one or more battery pack, providing a frame member of a vehicle, interfacing the engagement surface of the support panel with the one or more battery pack to secure the support panel to the one or more battery pack, securing the support panel to the one or more battery pack with the first coupling member, and securing the support panel to the frame member of a vehicle with the second coupling member.

According to aspects of the disclosure, the method may comprise joining a side panel to the support panel after securing the support panel to the one or more battery pack and securing the support panel to the frame member of a vehicle.

In this manner described and according to aspects illustrated herein, the battery pack support system configured for use on a vehicle and the method of securing one or more battery pack to a vehicle are capable of allowing for multiple battery packs to be mounted to a vehicle, while improving durability, safety, and aftermarket service of the battery packs mounted to a vehicle and reducing complexity and costs associated with mounting the battery packs to a vehicle.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a vehicle including a battery pack support system according to aspects of the disclosure;
**FIG. 2** shows a front perspective view of the battery pack support system according to aspects of the disclosure;
**FIG. 3** shows a rear perspective view of the battery pack support system of **FIG. 2****,** including a plurality of battery packs secured and mounted to a frame of a vehicle according to aspects of the disclosure;
**FIG. 4** shows a front perspective view of the battery pack support system of **FIG. 3****;**
**FIG. 5** shows an enlarged front view of the battery pack support system of **FIG. 3****;**
**FIG. 6** shows a front perspective view of a battery pack according to aspects of the disclosure;
**FIG. 7** shows a front perspective view of a support panel and a third coupling member of the battery pack support system according to aspects of the disclosure;
**FIG. 8** shows an enlarged partial rear perspective view of the battery pack support system of **FIG. 3****;**
**FIG. 9** shows an enlarged side perspective view of the battery pack support system of **FIG 3****;**
**FIG. 10** shows an enlarged side perspective view of the battery pack support system of **FIG. 3****,** illustrating a battery pack being added or removed from the battery pack support system;
**FIG. 11** shows an enlarged side cross-sectional view of the battery pack support system of **FIG. 3****;**
**FIG. 12** shows an enlarged front cross-sectional view of the battery pack of **FIG. 6****;**
**FIG. 13** shows an enlarged side perspective view of the battery pack support system of **FIG. 3****;**
**FIG. 14** shows a partial front cross-sectional view of the battery pack support system of **FIG. 2****;**
**FIG. 15** shows a front perspective view of the battery pack support system of **FIG. 3** during assembly according to aspects of the disclosure;
**FIG. 16** shows a front perspective view of the battery pack support system of **FIG. 3** during assembly according to aspects of the disclosure;
**FIG. 17** shows a front perspective view of the battery pack support system of **FIG. 3** during assembly according to aspects of the disclosure;
**FIG. 18** shows an enlarged side perspective view of the battery pack support system of **FIG. 3****;**
**FIG. 19** shows an enlarged side perspective view of the battery pack support system of **FIG. 3****,** including an auxiliary device according to aspects of the disclosure;
**FIG. 20A** shows a schematic view of the battery pack support system of **FIG. 3****,** including a retracting mechanism in a first position according to aspects of the disclosure; and
**FIG. 20B** shows a schematic view of the battery pack support system of **FIG. 3****,** including the retracting mechanism in a second position according to aspects of the disclosure;

### DETAILED DESCRIPTION

The detailed description set forth below provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular example(s) described. On the contrary, the intention of this disclosure is to cover all modifications, equivalents, and alternatives falling within the scope of the disclosure.

Various materials, methods of construction and methods of fastening will be discussed in the context of the disclosed example(s). Those skilled in the art will recognize known substitutes for the materials, construction methods, and fastening methods, all of which are contemplated as compatible with the disclosed example(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below," or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

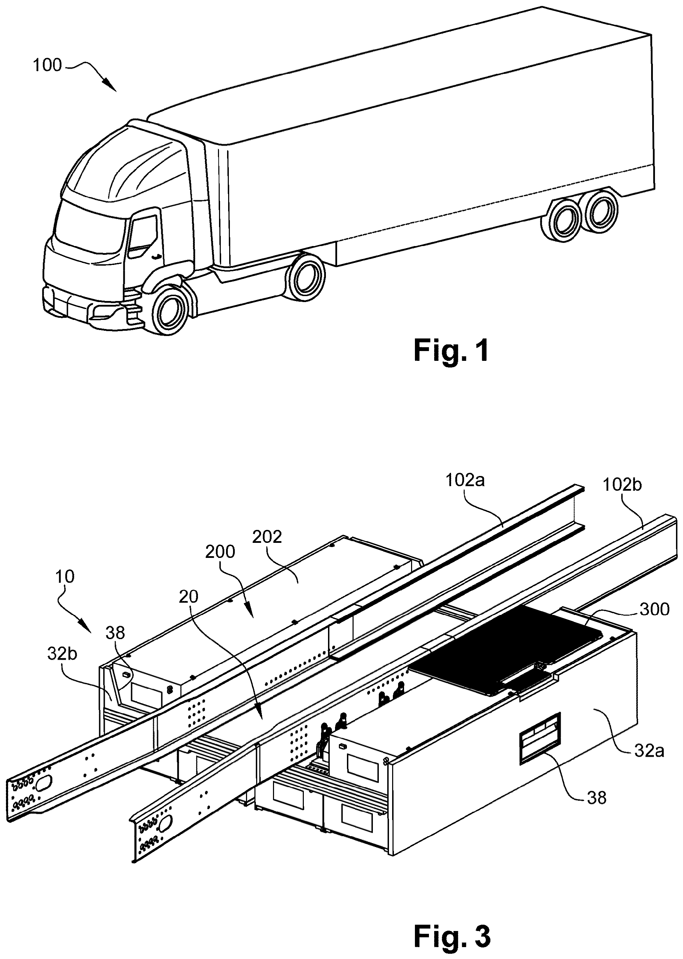

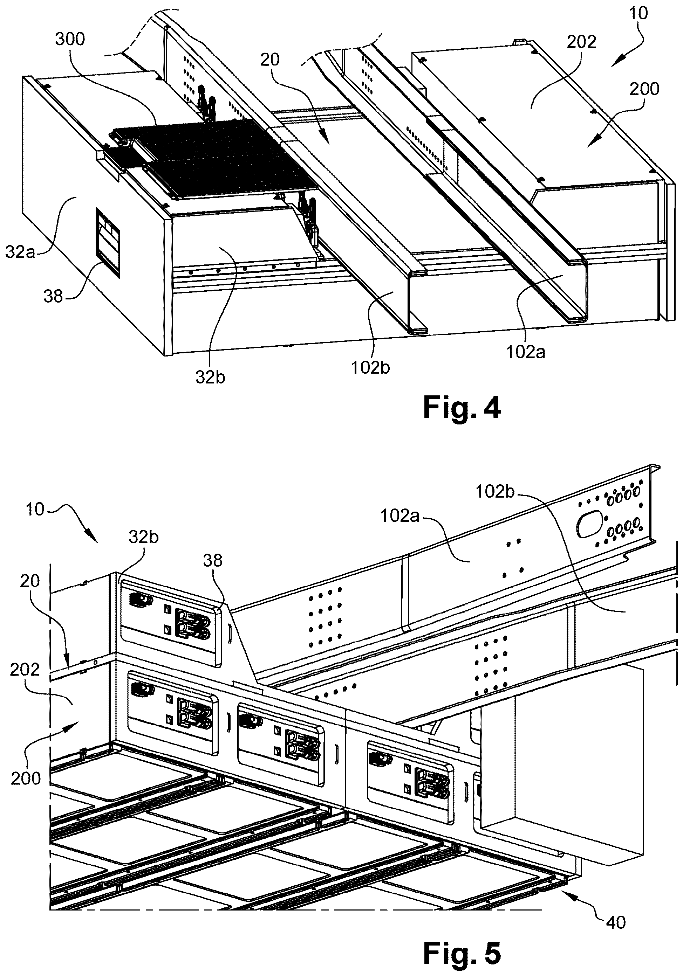

**FIGS. 1-5** show a battery pack support system (hereafter, "the system") 10 and a method of securing one or more battery pack to a vehicle. Referring to **FIG. 1****,** the system 10 is configured for use on a vehicle 100. In examples, the system 10 is configured to be mounted to the vehicle 100. It is contemplated that the vehicle may be a heavy-duty vehicle, such as a truck, bus, and/or construction equipment. However, it should be understood that the system 10 may be configured for use on other types of vehicles.

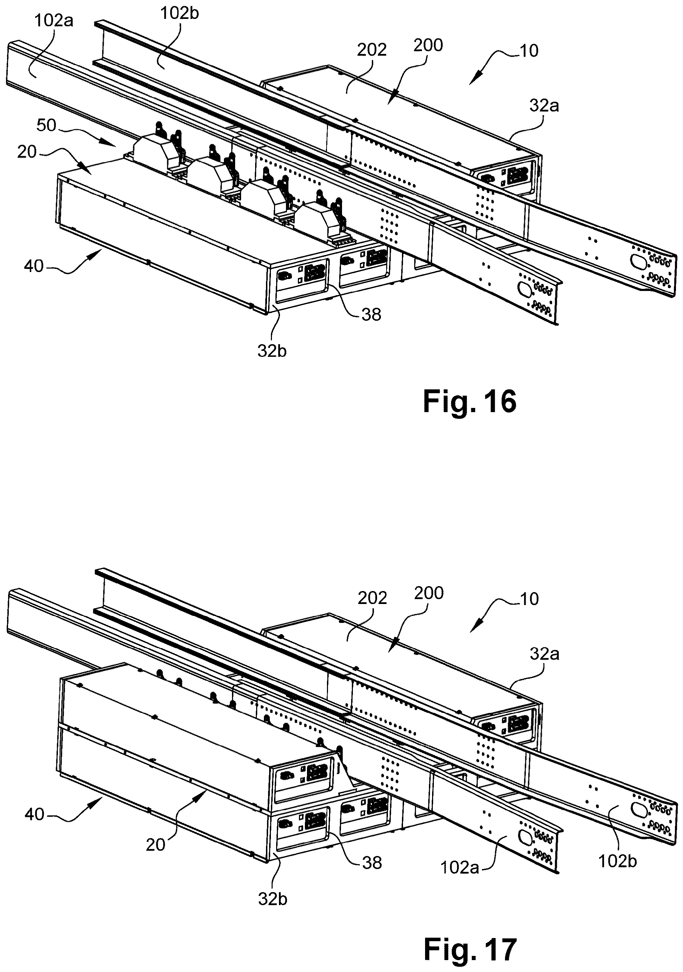

Referring to **FIGS. 1**, 3-5, 7, and 15-17, the vehicle 100 to which the system 10 may be mounted to includes a frame (not shown). In examples, the frame of the vehicle 100 may be configured to bear a load corresponding to one or more parts of the vehicle 100, such as a body of the vehicle 100, an engine of the vehicle 100, wheels of the vehicle 100, and/or the like. In examples, the frame of the vehicle 100 may include one or more frame member 102a, 102b extending longitudinally between a front of the vehicle 100 and a rear of the vehicle 100. It is contemplated that the terms "front" and "rear" may be understood with respect to a driving direction of the vehicle 100. In examples, the frame of the vehicle 100 may include a first frame member 102a and a second frame member 102b. The first frame member 102a may extend substantially parallel to the second frame member 102b. The first frame member 102a and second frame member 102b may be referred to herein collectively as "the frame member 102a, 102b," unless reference to the first frame member 102a and the second frame member 102b is otherwise necessary.

As shown in **FIGS. 3-6**, 10, and 15-18, the system 10 is configured to support and/or mount one or more battery pack 200 on and/or to the vehicle 100. In examples, the system 10 is configured to support and/or mount a plurality of the battery pack 200 on and/or to the vehicle 100. In examples, the system 10 may be configured to support and/or mount at least six (6) battery packs 200 on and/or to the vehicle 100. The plurality of battery packs 200 may be referred to herein collectively as "the battery pack 200," unless reference to the plurality of battery packs 200 or individual battery packs 200 is otherwise necessary.

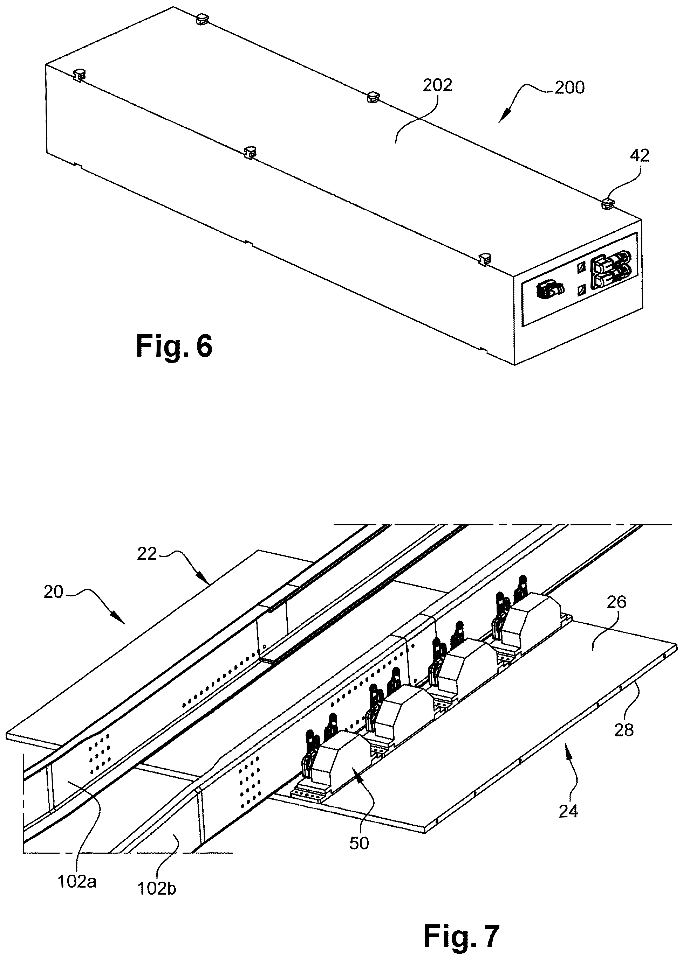

In examples, the battery pack 200 includes a battery (not shown) configured for rechargeable energy storage. The battery may include a plurality of battery modules (not shown) and each battery module may include a plurality of connected battery cells (not shown). Referring to **FIG. 6****,** the battery pack 200 includes a battery housing 202 configured to enclose the battery. The battery housing 202 and, thus, the battery pack 200, may be in the shape of a cuboid. In particular, the battery housing 202 and, thus, the battery pack 200, may be in the shape of an elongated cuboid. The battery pack 200 is configured to extend longitudinally when arranged within the system 10. Accordingly, the system 10 is configured to support and/or mount a longitudinally extending elongated cuboid.

Including the battery housing 202 and, thus, the battery pack 200, in the shape of an elongated cuboid, configured to extend longitudinally when arranged within the system 10, and/or configuring the system 10 to support the same, allows for improved arrangement and assembly of the battery pack 200 within the system 10. Additionally or alternatively, including the battery housing 202 and, thus, the battery pack 200, in the shape of an elongated cuboid, configured to extend longitudinally when arranged within the system 10, and/or configuring the system 10 to support the same, allows for simplified battery pack design and packaging, with limited space between the plurality of battery packs 200 and, thus, limited movement and vibration between the plurality of battery packs 200 within the system 10. As a result, costs and complexity associated with mounting the battery pack 200 to the vehicle 100 are reduced. Additionally, durability of the battery pack 200, the components of which are sensitive to damage and/or reduced lifetime due to vibration and twisting of the frame of the vehicle 100, is improved.

As illustrated in **FIGS. 3-7**, 10, and 15-18, the system 10 is configured to support and/or mount the battery pack 200 on and/or to the vehicle 100. To this end, the system 10 includes a support panel 20 configured to support and/or mount the battery pack 200 on and/or to the vehicle 100. The support panel 20 is configured to be secured to the battery pack 200. Additionally, the support panel 20 is configured to be secured to the frame member 102a, 102b of the vehicle 100. In examples, the support panel 20 is configured to extend across the frame member 102a, 102b, at a position above or below the frame member 102a, 102b, when the support panel 20 is secured to the frame member 102a, 102b. It is contemplated that the terms "above," "below," "top," and "bottom," as used herein with respect to the support panel 20, may be understood with respect to a surface on which the vehicle 100 is positioned.

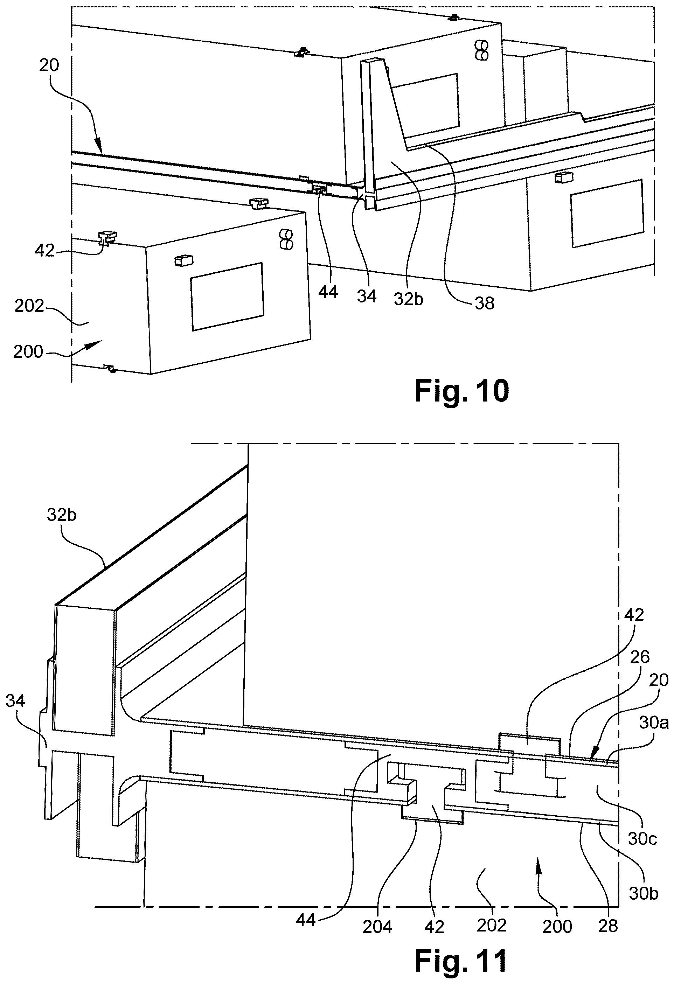

Referring to **FIGS. 7** **and** **11****,** the support panel 20 extends between a first end 22 and a second end 24. In examples, the first end 22 and second end 24 of the support panel 20 may correspond to and/or extend substantially parallel to sides of the vehicle 100. It is contemplated that the term "sides," with reference to the vehicle 100, may be understood with respect to the driving direction of the vehicle 100. The support panel 20 includes one or more engagement surface 26, 28 extending between the first end 22 and the second end 24 of the support panel 20. In examples, the support panel 20 includes a first engagement surface 26 and a second engagement surface 28. The first engagement surface 26 and the second engagement surface 28 are each configured to interface with the battery pack 200 to secure the support panel 20 to the battery pack 200. In examples, the first engagement surface 26 and the second engagement surface 28 are substantially flat, such that the battery pack 200 may interface with each engagement surface 26, 28 in a surface-to-surface arrangement. The first engagement surface 26 opposes the second engagement surface 28 so that the battery pack 200 interfacing with the first engagement surface 26 is oriented in a position above the battery pack 200 interfacing with the second engagement surface 28 when each of the first engagement surface 26 and the second engagement surface 28 are interfacing with the corresponding battery pack 200. To this end, the first engagement surface 26 may be understood to be a top portion of the support panel 20 and the second engagement surface 28 may be understood to be a bottom portion of the support panel 20. The first engagement surface 26 and the second engagement surface 28 may be referred to herein collectively as "the engagement surface 26, 28," unless reference to the first engagement surface 26 and the second engagement surface 28 individually is otherwise necessary.

Referring to **FIG. 11****,** the support panel 20 is formed from a composite material. In examples, the support panel 20 is formed from at least a first material and a second material. The first material of the support panel 20 has a first density and the second material of the support panel 20 has a second density. The first density of the first material may be greater than the second density of the second material. Additionally or alternatively, the first material of the support panel 20 has a first rigidity and the second material of the support panel 20 has a second rigidity. The first rigidity of the first material may be greater than the second rigidity of the second material. In examples, the first material may be a metallic material, such as steel. However, it is contemplated that other materials having mechanical properties similar to a metallic material may be compatible with the system 10. In examples, the second material may be a foam material. However, it is contemplated that other materials having mechanical properties similar to a foam material may be compatible with the system 10. In this manner, the support panel 20 is capable of providing improved rigidity, load distribution, and protection battery pack 200 from mechanical abuse, such as from a collision, while also reducing a weight and, thus, costs corresponding to the system 10.

Referring to **FIG. 11****,** the support panel 20 includes a layered arrangement of the first material and the second material. The support panel 20 may include a first layer 30a formed of the first material, a second layer 30b formed of the first material, and a third layer 30c formed of the second material. The third layer 30c of the support panel 20 may be sandwiched between the first layer 30a and the second layer 30b of the support panel 20. In examples, the first layer 30a, second layer 30b, and third layer 30c of the support panel 20 may be formed and/or bound together with an adhesive. It is contemplated that the support panel 20 may also include one or more reinforcement member (not shown) embedded between the first layer 30a and the second layer 30b, thereby providing additional load distribution and collision protection.

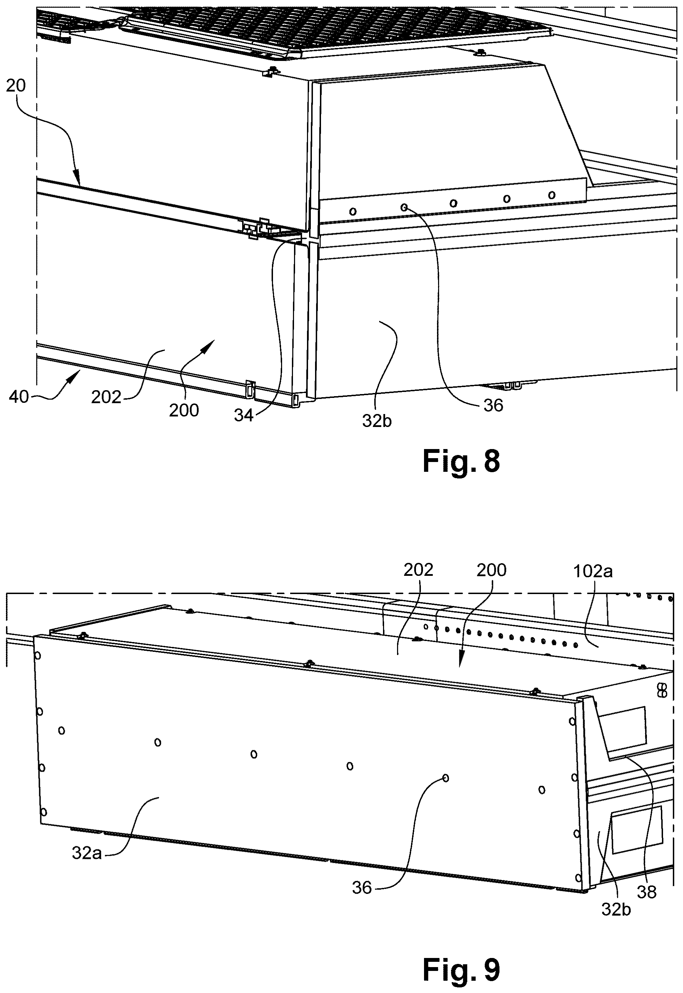

As shown in **FIGS 8-9** and 11, the system 10 includes a side panel 32a, 32b configured to be joined to the support panel 20. In examples, the system 10 may include a plurality of the side panel 32a, 32b. However, the plurality of the side panels 32a, 32b will be referred to herein collectively as "the side panel 32a, 32b," unless reference to the plurality of the side panels 32a, 32b is otherwise necessary. It is contemplated that the term "side," with reference to the side panel 32a, 32b, may be understood as corresponding to a front, a rear, top, bottom, and/or sides of the vehicle 100 in relation to the driving direction of the vehicle 100. In examples, the system 10 may include one or more side panel 32a configured to be joined to the support panel 20 at positions corresponding to sides of the vehicle 100. Additionally or alternatively, the system 10 may include one or more side panel 32b configured to be joined to the support panel 20 at positions corresponding to a front and rear of the vehicle 100. In examples, the system 10 may include a first pair of side panels 32a (hereafter, collectively referred to as "the first side panel 32a"), each corresponding to a side of the vehicle 100, and a second pair of side panels 32b (hereafter, collectively referred to as "the second side panel 32b"), each corresponding to the front or rear of the vehicle 100.

Referring to **FIGS. 8-11****,** one or more of the support panel 20, the first side panel 32a, and the second side panel 32b may be joined to each other by one or more fastener 36, such as a threaded fastener (see **FIGS. 8-9****).** In particular, the support panel 20 may be joined to the first side panel 32a by a plurality of the fastener 36. However, the plurality of fasteners 36 will be referred to herein as "the fastener 36," unless reference to the plurality of fasteners 36 is otherwise necessary. The support panel 20 may be joined to the first side panel 32a along a horizontal plane (see **FIG. 9****).** Additionally or alternatively, the first side panel 32a may be joined to the second side panel 32b along a vertical plane.

In examples, one or more of the support panel 20 and the side panel 32a, 32b may include a connector 34 configured to join the side panel 32a, 32b to the support panel 20 (see **FIGS. 8** **and** **10****-11).** In particular, the support panel 20 and the second side panel 32b may be joined by the connector 34. The connector 34 may be embedded in, fastened to, and/or configured to receive one or more of the support panel 20 and the side panel 32b. In examples, the connector 34 may be embedded in the support panel 20 and may be configured to receive the side panel 32b. The joint between the support panel 20 and the second side panel 32b formed by the connector 34 may be reinforced by the fastener 36, use of an adhesive, and/or the like. In examples, the second side panel 32b may include a first part joined to the support panel 20 by the connector 34 and a second part joined to the first part (see **FIG. 8****).** It is contemplated that including the side panel 32b in the first part and the second part facilitates assembly of the system 10 and/or improves accessibility of the battery pack 200. In examples, the first part of the side panel 32b may be joined to the second part of the side panel 32b by the fastener 36.

Referring to **FIG. 11****,** the side panel 32a, 32b and the support panel 20 may have a substantially similar composition. In examples, the side panel 32a, 32b is also be formed of the first material and the second material of the support panel 20, in the layered arrangement of the support panel 20. The side panel 32a, 32b is oriented substantially perpendicular to the support panel 20. The side panel 32a, 32b may be configured to at least partially enclose the battery pack 200 when the side panel 32a, 32b is joined to the support panel 20 and the battery pack 200 is interfacing with the engagement surface 26, 28. In this manner, the system 10 is further configured to protect the battery pack from mechanical abuse, such as from side collision to the vehicle 100.

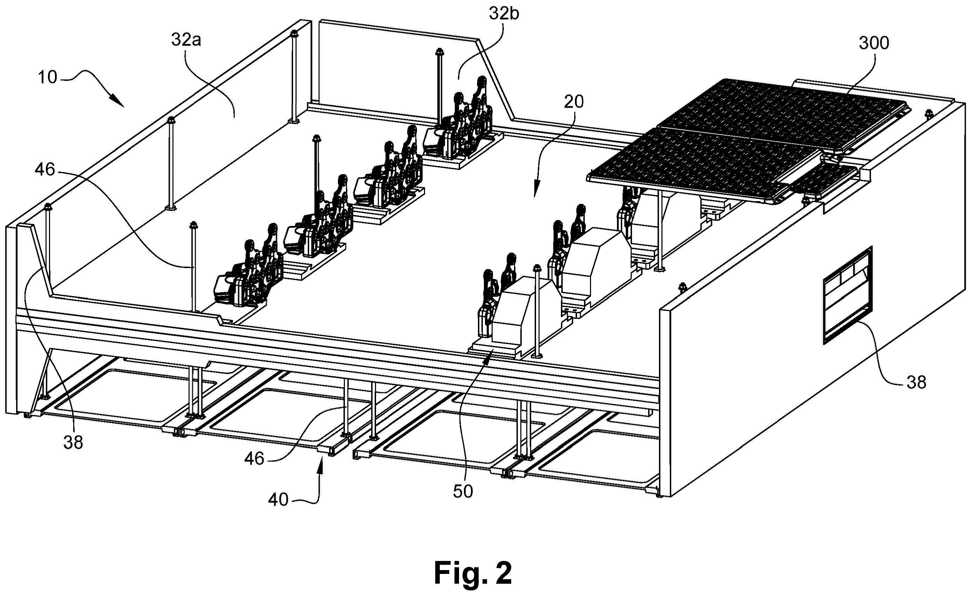

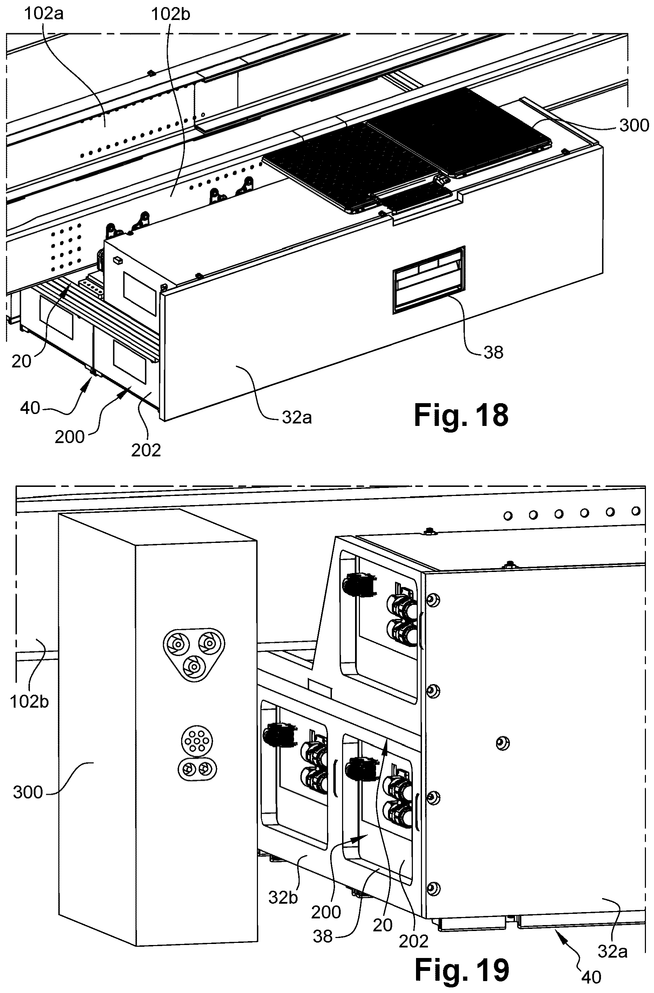

As shown in **FIGS. 2-5****,** the side panel 32a, 32b may define one or more opening and/or recess 38 configured to allow for access to the battery pack 200 for service of the battery pack 200. As shown in **FIGS. 18-19****,** it is contemplated that an auxiliary device 300, such as a step, a computing device, a charging device, a warning light, and/or the like, may connect to the battery pack 200 through the opening and/or recess 38 defined by the side panel 32a, 32b.

As shown in **FIGS. 2****,** **5****, and** **14****,** the system 10 may include a support brace 40 configured to provide additional support to the support panel 20 when the second engagement surface 28 of the support panel 20 is interfacing with the battery pack 200. Additionally or alternatively, the support brace 40 is configured to provide additional support to the battery pack 200 interfacing with the second engagement surface 28. Accordingly, it is contemplated that the support brace 40 may be part of the battery pack 200. Further, it is contemplated that the support brace 40 is configured to protect the battery pack 200 from any impact received from a position below the battery pack 200. In examples, the support brace 40 extends between the first end 22 and the second end 24 of the support panel 20, at a position below the support panel 20. Additionally or alternatively, the support brace 40 extends between a front and a rear of the battery pack 200, at a position below the battery pack 200. The support brace 40 extends substantially parallel to the support panel 20. In this manner, the support brace 40 is configured to be positioned below the battery pack 200 interfacing with the second engagement surface 28, thereby providing additional support to the battery pack 200 interfacing with the second engagement surface 28 and, thus the support panel 20, which also allows for the plurality of battery packs 200 to interface with the engagement surface 26, 28.

As shown in **FIGS. 6** **and** **10****-12,** the system 10 includes one or more first coupling member 42 configured to secure the support panel 20 to the battery pack 200. Accordingly, the first coupling member 42 may be referred to herein as the "battery coupling member 42" and/or the "first battery coupling member 42." In examples, the system 10 may include a plurality of the first coupling member 42. However, the plurality of the first coupling members 42 may be referred to herein collectively as "the first coupling member 42," unless reference to the plurality of the first coupling members 42 is otherwise necessary. The first coupling member 42 may be configured to extend from the first engagement surface 26 to secure the battery pack 200 interfacing with the first engagement surface 26 to the first engagement surface 26 and/or the first coupling member 42 may be configured to extend from the second engagement surface 28 to secure the battery pack 200 interfacing with the second engagement surface 28 to the second engagement surface 28. The first coupling member 42 may be configured to extend from the engagement surface 26, 28 to be received by at least a portion of the battery housing 202 and, thus, the battery pack 200, to secure the battery pack 200 to the engagement surface 26, 28. At least a portion of the first coupling member 42 may extend from the engagement surface 26, 28 in an orientation that is substantially perpendicular to the engagement surface 26, 28. At least a portion of the first coupling member 42 may be embedded and/or anchored in the support panel 20. Additionally or alternatively, at least a portion of the first coupling member 42 may be integrally formed, in one piece, with the support panel 20. Additionally or alternatively, the support panel 20 may include a first anchor member 44 embedded within the support panel 20 that is configured to secure the first coupling member 42 to the support panel 20.

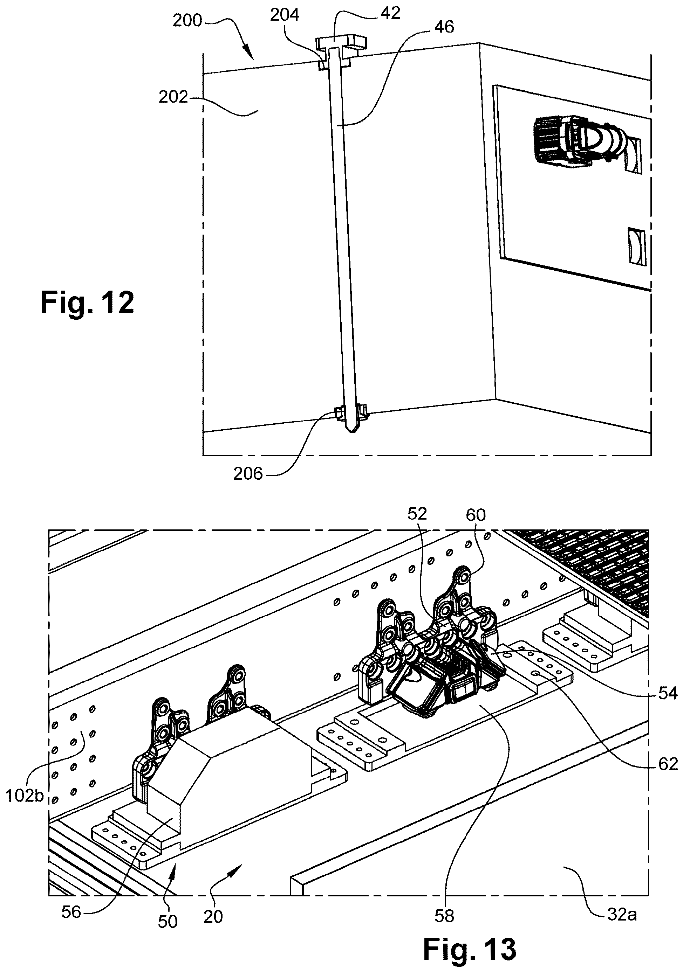

In examples, the first coupling member 42 may be in the form of an arm-like projection. Referring to **FIGS. 11** **and** **12****,** the first coupling member 42 may be configured to be received in a complimentary slot 204 defined by the battery pack 200, which may be configured to receive an arm-like projection. In this manner, the battery pack 200 may be slidably engaged with the support panel 20, thereby facilitating assembly of the system 10. In particular, the first coupling member 42 and, thus, the battery pack 200, may be slidably engaged with the first anchor member 44. In examples, one or more of the first coupling member 42 and the first anchor member 44 may be formed from a metallic extrusion. However, it is contemplated that other materials having a sufficient strength may be compatible to form the first coupling member 42.

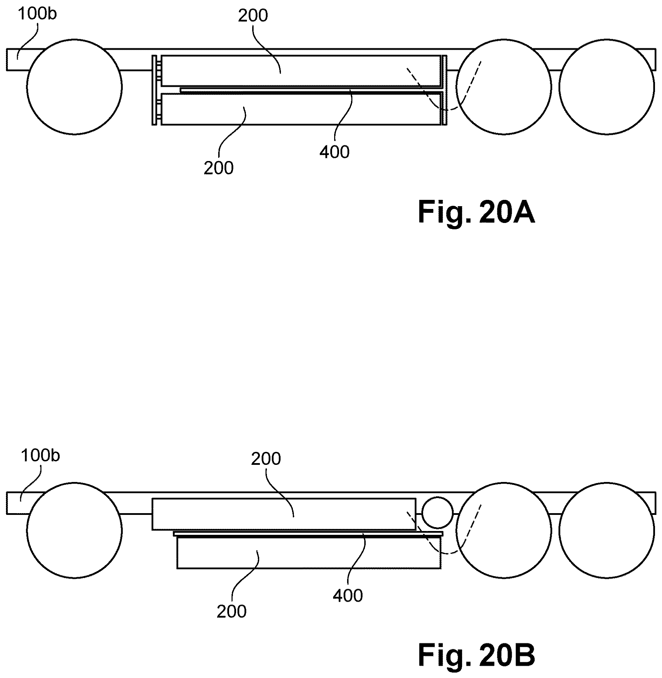

As illustrated by **FIGS. 20A-20B****,** in examples, the plurality of the battery packs 200 may be arranged in alignment with each other, such that a first battery pack 200 interfacing with the first engagement surface 26 is aligned in the driving direction of the vehicle 100 with a second battery pack 200 interfacing with the second engagement surface 28 (see **FIG. 20A****).** Alternatively, the plurality of battery packs 200 may be arranged such that the first battery pack 200 interfacing with the first engagement surface 26 is offset in the driving direction of the vehicle 100 relative to the second battery pack 200 interfacing with the second engagement surface 28 (see FIG. 19B), thereby allowing for access to the first battery pack 200 to service the first battery pack 200.

As shown in **FIGS. 2****,** **12****, and** **14****,** the system 10 includes one or more second coupling member 46 configured to secure the support panel 20 to the battery pack 200. Accordingly, the second coupling member 46 may be referred to herein as the "battery coupling member 46" and/or the "second battery coupling member 46." In examples, the system 10 may include a plurality of the second coupling member 46. However, the plurality of the second coupling members 46 may be referred to herein collectively as "the second coupling member 46," unless reference to the plurality of the second coupling members 46 is otherwise necessary. The second coupling member 46 may be configured to cooperate with the first coupling member 42 to secure the support panel 20 to the battery pack 200. As such, it is contemplated that the second coupling member 46 may be understood to be part of the first coupling member 42 and/or the first coupling member 42 may be understood to be part of the second coupling member 46. Alternatively, the second coupling member 46 may function to secure the support panel 20 to the battery pack 200 independent of the first coupling member 42 and, thus, it is contemplated that the second coupling member 46 may be understood to be independent of the first coupling member 42.

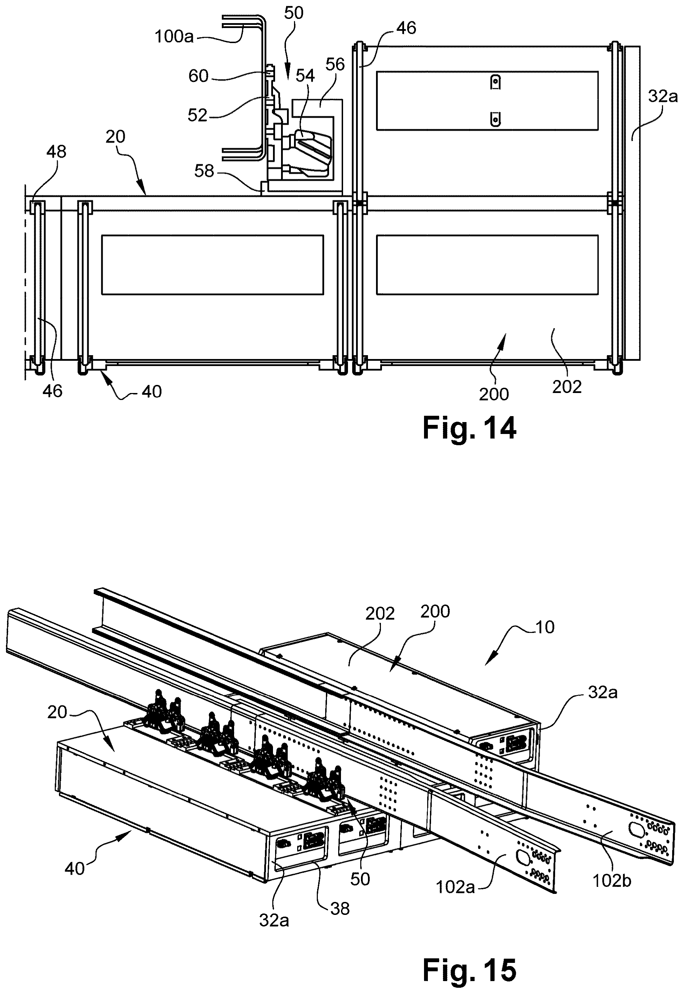

Referring to **FIGS. 2****,** **12****, and** **14****,** the second coupling member 46 may be configured to extend from the first engagement surface 26 to secure the battery pack 200 interfacing with the first engagement surface 26 to the first engagement surface 26 and/or the second coupling member 46 may be configured to extend from the second engagement surface 28 to secure the battery pack 200 interfacing with the second engagement surface 28 to the second engagement surface 28. Additionally or alternatively, the second coupling member 46 may be configured to extend from one or more of the side panel 32a and the battery pack 200, in a manner similar to the engagement surface 26, 28, to secure the battery pack 200. In such an example, the second coupling member 46 may engage a third coupling member 50 arranged on the support panel 20. The second coupling member 46 is configured to extend from the engagement surface 26, 28 to be received by at least a portion of the battery housing 202 and, thus, the battery pack 200, to secure the battery pack 200 to the engagement surface 26, 28. At least a portion of the second coupling member 46 may extend from the engagement surface 26, 28 in an orientation that is substantially perpendicular to the engagement surface 26, 28. At least a portion of the second coupling member 46 may be embedded and/or anchored in the support panel 20. Additionally or alternatively, at least a portion of the second coupling member 46 may be integrally formed, in one piece, with the support panel 20. Referring to **FIG. 14****,** additionally or alternatively, the support panel 20 may include a second anchor member 48 embedded within the support panel 20 that is configured to secure the second coupling member 46 to the support panel 20.

Referring to **FIGS. 2****,** **12****, and** **14****,** the second coupling member 46 may extend completely through the battery housing 202 and, thus, the battery pack 200. The second coupling member 46 may extend from the first engagement surface 26, through a first side of the battery housing 202, through an interior of the battery housing 202, and through a second side of the battery housing 202 opposing the first side of the battery housing 202. It is contemplated that the term "side," with reference to the battery pack 200, may be understood as corresponding to a front, a rear, top, bottom, and/or side of the vehicle 100 in relation to the driving direction of the vehicle 100. The second coupling member 46 may be anchored in the first side of the battery housing 202 and the second side of the battery housing 202 of the battery pack 200 interfacing with the first engagement surface 26. The second coupling member 46 may be anchored in the first side of the battery housing 202 and the second side of the battery housing 202 of the battery pack 200 interfacing with the second engagement surface 28. In examples, the second coupling member 46 securing the battery pack 200 interfacing with the second engagement surface 28 may be additionally or alternatively anchored in the support brace 40.

Referring to **FIG. 12****,** in examples, the second coupling member 46 may be in the form of a rod. The second coupling member 46 may be configured to be received through one or more complimentary opening 206 defined by the battery housing 204 of the battery pack 200, which may be configured to receive a rod. In examples, the second coupling member 46 may be in the form of an elongated fastener, such as a threaded fastener. However, it is contemplated that the second coupling member 46 may include other fastening mechanisms compatible with the system 10. In examples, once the battery pack 200 is interfacing with the first engagement surface 26 or the second engagement surface 28 of the support panel 20 and the second coupling member 46 is received by the battery pack 200, the second coupling member 46 may be torqued to secure the coupling between the support panel 20 and the battery pack 200.

As shown in **FIG. 2****,** **7**, 13-14, and 15-16, the system 10 includes one or more third coupling member 50 configured to secure the support panel 20 to the frame member 102a, 102b of the vehicle 100. Accordingly, the third coupling member 50 may be referred to herein as the "frame coupling member 50." In examples, the system 10 may include a plurality of the third coupling member 50. However, the plurality of the third coupling members 50 may be referred to herein collectively as "the third coupling member 50," unless reference to the plurality of the third coupling members 50 is otherwise necessary. The third coupling member 50 may be configured to extend from the first engagement surface 26 to secure the support panel 20 to the frame member 102a, 102b. The third coupling member 50 may be configured to extend from the first engagement surface 26 to be fastened to the frame member 102a, 102b. At least a portion of the third coupling member 50 may extend from the first engagement surface 26 in an orientation that is substantially perpendicular to the first engagement surface 26 of the support panel 20. At least a portion of the third coupling member 50 may be embedded in the support panel 20. Additionally or alternatively, at least a portion of the third coupling member 50 may be integrally formed, in one piece, with the support panel 20.

Referring to **FIGS. 13-14****,** the third coupling member 50 may include a first bracket 52 configured to be fastened to the frame member 102a, 102b of the vehicle 100. In examples the first bracket 52 may be fastened to the frame member 102a, 102b through a threaded connection formed by one or more of fastener 36 passing through one or more corresponding opening 60 defined by the first bracket 52. The fastener 36 may be configured to form a connection with corresponding threads included by the frame member 102a, 102b. In examples, the first bracket 52 may define a plurality of the opening 60 configured to receive the fastener 36. However, the plurality of openings 60 will be referred to herein as "the opening 60," unless reference to the plurality of openings 60 is otherwise necessary. Further, it is contemplated that the first bracket 52 may be fastened to the frame member 102a, 102b through any other fastening mechanism that may be compatible with the system 10.

Referring to **FIGS. 13-14****,** the third coupling member 50 may include a bushing 54 extending from the first bracket 52 configured to suspend the system 10 from the frame member 102a, 102b. The bushing 54 may be configured to extend substantially perpendicular from the first bracket 52 and, thus, the frame member 102a, 102b. The bushing 54 may be configured to be fastened to the first bracket 52 through a threaded connection. However, it is contemplated that the bushing 54 may be fastened to the first bracket 52 through any fastening mechanism that may be compatible with the system 10. Alternatively, the bushing 54 may be integrally formed, in one piece, with the first bracket 52. The third coupling member 50 may include a bushing housing 56 configured to receive the bushing 54 and form an interference-fit engagement with the bushing 54. Additionally, the bushing housing 56 may be configured to guide the system 10 into alignment with the frame member 102a, 102b.

The third coupling member 50 may include a second bracket 58 configured to be fastened to the bushing housing 56 and the support panel 20. In particular, the second bracket 58 may be configured to be fastened to the bushing housing 56 and the first engagement surface 26 of the support panel 20. The second bracket 58 may be configured to be fastened to one or more of the bushing housing 56 and the support panel 20 through a threaded connection formed by one or more fastener 36 passing through one or more corresponding opening 62 defined by the second bracket 58. In such an example, the bushing housing 56 may also include one or more corresponding opening (not shown) configured to receive the fastener 36. The fastener 36 may be configured to form a connection with corresponding threads included by the support panel 20. In such an example, the support panel 20 may include an insert (not shown) embedded therein including the corresponding threads. In examples, the second bracket 58 may define a plurality of the opening 62 configured to receive the fastener 36. However, the plurality of openings 62 will be referred to herein as "the opening 62," unless reference to the plurality of openings 62 is otherwise necessary. Further, it is contemplated that the second bracket 58 may be fastened to the bushing housing 56 and the support panel 20 through any other fastening mechanism that may be compatible with the system 10. Alternatively, the second bracket 58 may be integrally formed, in one piece, with the bushing housing 56 and/or the support panel 20.

As illustrated by **FIGS. 15-18****,** to assemble the system 10, the support panel 20 may be secured to the battery pack 200 before the support panel 20 is secured to the frame member 102a, 102b of the vehicle 100. In examples, after the support panel 20 is secured to the battery pack 200, the support panel 20 may be joined with the side panel 32a, 32b. After the support panel 20 is joined with the side panel 32a, 32b, the support panel 20 may be secured to the frame member 102a, 102b. However, one or more battery pack 200 and one or more side panel 32a, 32b may be secured to the support panel 20 after the support panel 20 is secured to the frame member 102a, 102b. As such, a majority of assembly of the system 10 may be completed prior to mounting the system 10 to the frame member 102a, 102b and, thus, the vehicle 100, which streamlines assembly of the system 10 and mounting of the system 10 to the vehicle 100.

Referring to **FIG. 3****,** according to an example, the system 10 configured for use on a vehicle 100 is shown. The system 10 includes the support panel 20 configured to support one or more battery pack 200 on a vehicle 100. The support panel 20 extends between the first end 22 and the second end 24. The support panel 20 includes the engagement surface 26, 28 extending between the first end 22 and the second end 24 of the support panel 20. The engagement surface 26, 28 is configured to interface with one or more battery pack 200 to secure the support panel 20 to one or more battery pack 200. The system 10 also includes the first coupling member 42, which is configured to secure the support panel 20 to one or more battery pack 200, and the second coupling member 50, which is configured to secure the support panel 20 to the frame member 102a, 102b of a vehicle 100. According to the example, the system 10 is capable of securing one or more battery pack 200 to a vehicle 100 as a single unit when the support panel 20 is secured to one or more battery pack 200 and the support panel 20 is secured to the frame member 102a, 102b of a vehicle 100.

In this manner, by way of the structures and/or relationships of the system 10, the system 10 is capable of allowing for a plurality of battery packs 200 to be mounted to a vehicle 100, while improving durability, safety, and aftermarket service of the plurality of battery packs 200 mounted to a vehicle 100 and reducing complexity and costs associated with mounting the plurality of battery packs 200 to a vehicle 100.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of a system may be transposed, alone or in combination, to a method and vice versa.

## Claims

1. A battery pack support system (10) configured for use on a vehicle (100), the battery pack support system comprising:
a support panel (20) configured to support one or more battery pack (200) on a vehicle (100), the support panel extending between a first end (22) and a second end (24), the support panel including an engagement surface (26, 28) extending between the first end and the second end of the support panel, the engagement surface being configured to interface with one or more battery pack to secure the support panel to one or more battery pack;
a first coupling member (42) being configured to secure the support panel (20) to one or more battery pack (200); and
a second coupling member (50) being configured to secure the support panel (20) to a frame member (102a, 102b) of a vehicle (100);
wherein, the battery pack support system (10) is capable of securing one or more battery pack (200) to a vehicle (100) as a single unit when the support panel (20) is secured to one or more battery pack and the support panel is secured to a frame member (102a, 102b) of a vehicle (100).

2. The battery pack support system (10) according to claim 1, wherein the support panel (20) is formed from a composite material.

3. The battery pack support system (10) according to any of claims 1-2, wherein the support panel (20) is formed from at least a first material and a second material.

4. The battery pack support system (10) according to claim 3, wherein the first material of the support panel (20) has a first density, the second material of the support panel has a second density, and the first density of the first material is greater than the second density of the second material.

5. The battery pack support system (10) according to any of claims 3-4, wherein the support panel (20) includes a layered arrangement of the first material and the second material.

6. The battery pack support system (10) according to any of claims 3-5, wherein the support panel (20) includes a first layer (30a) formed from the first material, a second layer (30b) formed from the first material, and a third layer (30c) formed from the second material.

7. The battery pack support system (10) according to claim 6, wherein the third layer (30c) of the support panel (20) is sandwiched between the first layer (30a) and the second layer (30b) of the support panel.

8. The battery pack support system (10) according to any of claims 1-7, comprising a side panel (32a, 32b) being configured to be joined to the support panel (20), the side panel being configured to at least partially enclose one or more battery pack (200) when the side panel is joined to the support panel and the support panel is secured to one or more battery pack.

9. The battery pack support system (10) according to claim 8, wherein the side panel (32a, 32b) is oriented substantially perpendicular to the support panel (20) when the side panel is joined to the support panel.

10. The battery pack support system (10) according to any of claims 8-9, wherein the side panel (32a, 32b) and the support panel (20) have a substantially similar composition.

11. The battery pack support system (10) according to any of claims 1-10, wherein the support panel (20) includes a first engagement surface (26) and a second engagement surface (28), each of the first engagement surface and the second engagement surface extend between the first end (22) and the second end (24) of the support panel, and each of the first engagement surface and the second engagement surface are configured to interface with one or more battery pack (200) to secure one or more battery pack to support panel.

12. The battery pack support system (10) according to claim 11, wherein the first engagement surface (26) of the support panel (20) opposes the second engagement surface (28) of the support panel so that one or more battery pack (200) interfacing with the first engagement surface is oriented in a position above one or more battery pack interfacing with the second engagement surface when each of the first engagement surface and the second engagement surface are interfacing with one or more battery pack.

13. The battery pack support system (10) according to any of claims 1-12, wherein the support panel (20) is configured to extend across a frame member (102a, 102b) of a vehicle (100), at a position above or below a frame member of a vehicle (100), when the support panel is secured to a frame member of a vehicle (100).

14. A method of securing one or more battery pack (200) to a vehicle (100), the method comprising:
providing the battery pack support system (10) according to any of claims 1-13;
providing one or more battery pack (200);
providing a frame member (102a, 102b) of a vehicle (100);
interfacing the engagement surface (26, 28) of the support panel (20) with the one or more battery pack (200) to secure the support panel to the one or more battery pack;
securing the support panel (20) to the one or more battery pack (200) with the first coupling member (42); and
securing the support panel (20) to the frame member (102a, 102b) of a vehicle (100) with the second coupling member (50).

15. The method of claim 14, comprising j oining a side panel (32a, 32b) to the support panel (20) after securing the support panel to the one or more battery pack (200) and securing the support panel to the frame member (102a, 102b) of a vehicle (100).
